Europäisches Patentamt

European Patent Office

Office européen des brevets

(11) Veröffentlichungsnummer: **0 327 660 B1**

(12) **EUROPÄISCHE PATENTSCHRIFT**

(45) Veröffentlichungstag der Patentschrift: **09.12.92**

(51) Int. Cl.⁵: **C01F 7/14**, C08K 3/22

(21) Anmeldenummer: **88102017.6**

(22) Anmeldetag: **11.02.88**

(54) **Verfahren zur Herstellung von Füllstoffen und Flammschutzmitteln auf der Basis von Aluminiumhydroxid in Form von Hydrargillit.**

(43) Veröffentlichungstag der Anmeldung:
**16.08.89 Patentblatt 89/33**

(45) Bekanntmachung des Hinweises auf die Patenterteilung:
**09.12.92 Patentblatt 92/50**

(84) Benannte Vertragsstaaten:
**AT BE CH DE ES FR GB GR IT LI LU NL SE**

(56) Entgegenhaltungen:
**EP-A- 0 271 104        DE-A- 636 707
DE-A- 3 131 088        FR-A- 2 330 453
GB-A- 1 123 184        US-A- 3 105 053**

**CH. MISRA: "Industrial Alumina Chemicals",
Seiten 8-13, ACS-monograph 184, 1986**

**CHEMICAL ABSTRACTS, Band 69, Nr. 14,
1968, Seite 4988, Zusammenfassung Nr.
53277b, Columbus, Ohio, US; & JP-A-67 16
938 (SUMITOMO CHEMICAL INDUSTRY CO.,
LTD) 09-09-1967**

**CHEMICAL ABSTRACTS, Band 105, Nr. 10,
September 1986, Zusammenfassung Nr.
81717a, Columbus, Ohio, US; & JP-A-61 58
815 (KAO CORP.) 26-03-1986**

(73) Patentinhaber: **VAW aluminium AG
Georg-von-Boeselager-Strasse 25
W-5300 Bonn 1(DE)**

(72) Erfinder: **Schmidt, Hubertus, Dr.
Hauptstr. 75
W-5208 Eitorf(DE)**
Erfinder: **Husmann, Albrecht
Burgunderstr. 16
W-5303 Bornheim 2(DE)**

(74) Vertreter: **Müller-Wolff, Thomas, Dipl.-Ing.
c/o VAW aluminium AG Patentabteilung
Postfach 2468
W-5300 Bonn 1(DE)**

EP 0 327 660 B1

**Beschreibung**

Verfahren zur Herstellung von Füllstoffen und Flammschutzmitteln auf der Basis von Aluminiumhydroxid in Form von Hydrargillit (Gibbsit).

Die Erfindung betrifft ein Verfahren zur Herstellung von Füllstoffen und Flammschutzmitteln insb. für Kunststoffe auf der Basis von Aluminiumhydroxid in Form von Hydrargillit (Gibbsit)) sowie ein morphologisch modifiziertes Aluminiumhydroxid, hergestellt nach dem erfindungsgemäßen Verfahren.

Aluminiumhydroxid als Rohstoff für Aluminiumoxide und Aluminiumsalze sowie als Füllstoff und Flammschutzmittel wird in der Regel im Bayer-Verfahren erzeugt.

Es entsteht im herkömmlichen Prozeß als feinteiliges oder grobkörniges Material irregulär (annähernd rundlich) geformter Aggregate/Agglomerate unter folgenden Bedingungen (nach O. Tschamper, Light Metals 1981, 103-115):

|  | $Na_2O_{frei}$ [g/l] | $Al(OH)_3$-Impfermenge [g/l] | Ausrührstart-Temperatur [°] | Ausrührdauer [h] |
|---|---|---|---|---|
| USA | ≤ 110 | 50 - 120 | ca. 70 | ca. 30 |
| Europa | 150 | ≧ 200/250 - 400 | ca. 55 | ca. 50-70 |

Die wesentlichen Verfahrensbedingungen des heutigen Bayer-Prozesses sind durch folgende Parameter festgelegt (nach J.L. Anjier und M.L. Roberson, Precipitation Technology, Light Metals 1985, 367-375):

|  | Start-Molverhältnis $Na_2O_{frei}/Al_2O_3$ | $Al(OH)_3$-Impfermenge [g/l] | Temperatur [°] |
|---|---|---|---|
| (a) Agglomerationsstufe | 1,37 - 1,80 | 15-150 | 85-46 |
| (b) Wachstumsstufe | 1,37 - 2,41 | 130-2000 | 85-40 |

Sein Hauptziel ist ein grobkörniges, verstaubungsarmes Elektrolyse-Aluminiumoxid im Korngrößenbereich von ca. 45-150/200 μm.

Die im Bayer-Verfahren mit großen Einsatzmengen eines grobkörnigen Aluminiumhydroxids als Impfstoff kristallisierten oder aus Bayer-Aluminatlauge mittels feinstteiliger Aluminiumhydroxid-Impfstoffe (aus Neutralisations- oder Mahlprozessen) hergestellten und gegebenenfalls in nachgeschalteten Aufbereitungsschritten wie Anlösung, Mahlung, Siebung oder Sichtung in Korngröße und -form veränderten Produkte lassen sich ebenfalls in vielfältiger Weise als Füllstoffe und Flammschutzmittel verwenden.

Die Patentschriften
USP 2,549,549
DE-PS 897843 und 952978
DE-PS 2852273
DE-OS 3338169 und 3338186, ferner EPS 0102403 und EPA 0166053 vermitteln (in Auswahl) einen Einblick in den Stand der Technik zur Herstellung derartiger Aluminiumhydroxide. In der DE-PS 2852273 werden beispielsweise die Herstellung eines als Füllstoff und Flammschutzmittel in Kunststoff einsetzbaren Aluminiumhydroxids beschrieben sowie die anwendungstechnischen Vorteile genannt, die in der besonderen, durch Anlöseverfahren erzeugten abgerundeten Kornform liegen.

Chemische Konstitution (z.B. Kristallwasseranteil) und thermisches Verhalten (z.B. Abbautemperatur) sind die entscheidenden Kriterien für die Funktion eines Füllstoffs als Flammschutzmittel. Ist darüber hinaus die Funktion eines Verstärkungsmittels erwünscht, müssen zusätzliche Produkteigenschaften in Betracht gezogen werden. Hierzu zählt u.a. die Partikelgeometrie (Formfaktor syn. shape factor, shape ratio, aspect ratio). (Im "Handbook of Fillers and Reinforcements for Plastics", Van Nostrand Reinhold Company, 1978, H.S. Katz, J.V. Milewski ed., ferner in Kunststoffe 73, 511-515, 1983, werden beispielsweise diese Gesichtspunkte ausführlich erörtert.)

Der Vergleich mit Eigenschaften der zuvor genannten, über Bayer-Verfahren und Bayer-Verfahrensvarianten sowie spezielle Aufbereitungsprozeduren zugänglichen Produkte zeigt, daß die bekannten Produkte keine für Verstärkungsmittel typischen Merkmale aufweisen oder diese nur in untergeordnetem Maße besitzen. Deutliche Verstärkungseffekte erwartet man von Kristallisaten, deren Partikel aus Plättchen oder Nadeln/Fasern mit hohen Formfaktoren bestehen. Solche Produkte kennt man in Einzelfällen auch vom Hydrargillit (Gibbsit); jedoch existieren keine Hinweise, wie der jeweilige morphologische Typ im Rahmen eines großtechnischen Prozesses und im gewünschten Maße verändert werden könnte. Beschreibungen dieser speziellen Kristallisationsformen des Hydrargillits (Gibbsit) (z.B. feinteilige, plättchenförmige Kristallisate mit Korngrößen von ca. 1 $\mu$m oder langprismatische, nadelig-stengelige Kristallisate aus reinen K-Aluminatlaugen) findet man u.a. in "Industrial Alumina Chemicals", Ch. Misra auth., ACS Monograph 184, 1986, p. 10-11 46-47... .

Aufgabe der vorliegenden Erfindung ist es, ein Verfahren zur Steuerung der Morphologie bei der Herstellung von Füllstoffen und Flammschutzmitteln auf der Basis von Aluminiumhydroxid in Form von Hydrargillit (Gibbsit) zu entwickeln, das im großtechnischem Maßstab durchführbar, durch Additivrückführung wirtschaftlich und umweltfreundlich ist und zu einer großen Variationsbreite von unterschiedlich ausgebildeten, nadelig-stengeligen, faserförmigen, plättchenförmigen oder tafelförmigen Hydrargillitkristallen (Gibbsitkristallen) mit hohen Formfaktoren und geringem Aggregations-/Agglomerationsgrad führt, die Verstärkungseigenschaften besitzen.

Mit der vorliegenden Erfindung gelang es, diese Aufgabe zu lösen und ein Verfahren zu entwickeln, das mit geeigneten Additiven eine Steuerung der Morphologie von Aluminiumhydroxid (Hydrargillit/Gibbsit) innerhalb eines Verfahrensganges ermöglicht. Die Ergebnisse dieses Verfahrens sind insofern überraschend, als Bayer-Aluminatlaugen üblicherweise durch eine große Zahl unterschiedlichster anorganischer und organischer Verunreinigungen in hohen Mengen vorbelastet sind und aus den bisher bekannten Kristallisationsprozessen mit Natriumaluminatlaugen die Anwendbarkeit der "Additivmethode" bei verunreinigten Laugen problematisch erschien.

In dem erfindungsgemäßen Verfahren lassen sich durch die in den Patentansprüchen angegebenen Merkmale neuartige Aluminiumhydroxide erzeugen, deren Formen von extrem dünnen Plättchen, blatt- und tafelförmigen Kristallen bis zu kurzprismatischen, nadelig-stengeligen und faserförmigen Produkten reichen.

Die habitussteuernden Effekte sind besonders auffällig
* bei Kristallisationsprozessen oberhalb 70 °C, außerhalb der Standardtemperaturen des Bayer-Verfahrens
* bei Kristallisationsprozessen aus Natriumaluminatlaugen mit Molverhältnissen $Na_2O/Al_2O_3$ < 1,3, außerhalb der Standardmolverhältnisse des Bayer-Verfahrens
* bei Verwendung hoher Additivmengen
* bei Verwendung niedriger Impfstoffmengen

Das erfindungsgemäße Verfahren läßt sich sowohl mit einer Bayer-Aluminatlauge als auch einer synthetischen, aus Aluminiumhydroxid und Natronlauge oder einer aus festem Natriumaluminat hergestellten Lauge durchführen; eine bevorzugte Zusammensetzung der Bayer-Laugen und synthetischen Laugen ist in den Patentansprüchen angegeben.

Beispiele für das erfindungsgemäße Verfahren findet man in Tabelle 1. Die dort aufgeführten Daten verdeutlichen, wie durch Wahl des Molverhältnisses und der Absolutkonzentrationen $Na_2O$ und $Al_2O_3$ der Natriumaluminatlauge, durch Additivart und -menge, durch Impfstoffart und -menge, durch Kristallisationsdauer und -temperatur die Produktmorphologie des Aluminiumhydroxids innerhalb weiter Grenzen im gewünschten Maße gesteuert werden kann.

Der Einsatz von Impfstoffen kann bei hoch übersättigter Natriumaluminatlauge des Molverhältnisses $Na_2O : Al_2O_3 \leq 1,2$ mit Impfraten von 1 - 2 % und bei weniger übersättigter Natriumaluminatlauge des Molverhältnisses $Na_2O : Al_2O_3 \geq 1,2$ mit Impfraten von 3 - 10 % erfolgen.

Unter wirtschaftlichen Gesichtspunkten muß die jeweils angestrebte, spezifische Produktmorphologie durch eine spezielle Kombination der Verfahrensparameter definiert werden, wobei
* der Additiveinsatz (Art und Menge; Verfügbarkeit; Kosten; Rückführbarkeit bzw. Wiedernutzungsgrad; eventuelle Anwendung von Additivkombinationen)
* Art, Menge und/oder Zweckmäßigkeit eines Impfstoffeinsatzes
* Laugekonzentration und Molverhältnis (hohe MV sind in der Regel unwirtschaftlich)
* Rührbedingungen (Zeiten über 120 h sind unwirtschaftlich)
* Temperaturen und Zeiten
zu berücksichtigen sind.

Beachtet werden muß ferner, daß der habitussteuernde Effekt unterhalb einer Additivmindestmenge nicht mehr signifikant ist und sich oberhalb einer Maximalmenge - insbesondere bei komplexierenden Additiven - nachteilig auf die Produktausbeute auswirkt. Additive in Form ihrer Salze und Derivate ermöglichen eine Kristallisation ohne wesentliche pH-Wert-Beeinflussung der Lauge.

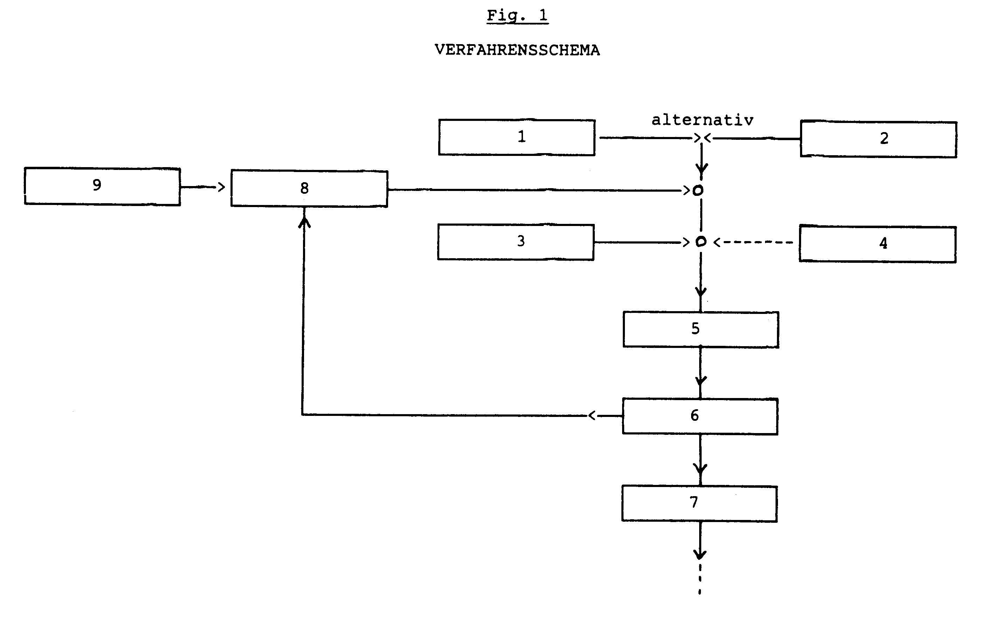

Der Verfahrensablauf wird im folgenden anhand des in Fig. 1 dargestellten Schemas näher erläutert. Synthetische Aluminatlauge 1 oder Bayer-Lauge 2 wird mit einem Additiv 3 und gegebenenfalls einem Impfstoff 4 vermischt. Die anschließende Kristallisation 5 erfolgt unter den in den Patentansprüchen angegebenen Bedingungen. Nach Filtration 6 und Trocknung 7 kann das Produkt abgezogen und gegebenenfalls einem Aufbereitungsschritt (Desagglomeration o.a.) wie Anlösung, Mahlung, Siebung oder Sichtung oder einer Oberflächenbehandlung unterworfen werden. Zur Herstellung eines Kreislaufprozesses ist es möglich, Mutterlauge 8 mit frischem Aluminiumhydroxid 9 zu einer Natriumaluminatlauge der gewünschten Startkonzentration umzusetzen und vor Zugabe des Additivs 3 in die Produktlinie einzuführen.

Wie man Aluminiumhydroxide des erfindungsgemäßen Verfahrens, die in neuartiger Weise sowohl die Funktion eines Füllstoffs, Flammschutzmittels als auch Verstärkungsmittels besitzen, nutzen kann, wird an Beispielen in Tabelle 2 verdeutlicht.

Verglichen werden hierbei mechanische Werte von Extrudaten der reinen Thermoplaste PE, PP und ABS mit entsprechenden Werten von Thermoplasten, die

(a) mit Aluminiumhydroxiden aus herkömmlichen Verfahren (Apyral 4; 40; 90[*])
(b) mit erfindungsgemäßen Produkten gefüllt wurden.

In der Regel muß man beim Einsatz von Standard-Aluminiumhydroxiden im Kunststoff bei hohen Füllgraden, die zu einem hinlänglichen Flammschutz erforderlich sind, mit erheblichen Beeinträchtigungen der mechanischen Eigenschaften des gefüllten Kunststoffs rechnen. Die in Tabelle 2 aufgeführten Vergleichsbeispiele zeigen, wie man - entsprechend den Vorstellungen über den Mechanismus von Verstärkungseffekten durch einen Füllstoff - auch mit einem Standard-Aluminiumhydroxid mit zunehmender Feinteiligkeit sowie durch Optimierung des Haftvermögens in einer Matrix (z.B. durch eine Oberflächenbehandlung des Hydroxids) gewisse Verbesserungen der Festigkeitswerte des gefüllten Kunststoffs erreichen kann, jedoch eine wesentliche Verstärkung nur dort erreicht, wo erfindungsgemäße Hydroxide mit ihren ausgeprägten morphologischen Besonderheiten eingesetzt wurden. Dies wird insbesondere an den Versuchsbeispielen mit dem Thermoplasten ABS deutlich.

Weitere Anwendungsmöglichkeiten der erfindungsgemäßen Produkte, die in ihrer speziellen Kristallform, ihrer von herkömmlichen Aluminiumhydroxiden abweichenden mechanischen Stabilität, ihrem teilweise speziellen Verunreinigungsgrad und andersartigen thermischen Abbauverhalten (bis hin zum Sinterverhalten) begründet sind, betreffen beispielsweise auch den Einsatz in einer anderen Matrix als Kunststoff, die Verwendung in Polier-"Pasten", Zahnpasten, Farben und Lacken, bei der Papierfertigung und im Bereich keramischer Rohstoffe.

[*]) Apyral 4: relativ grobes, aus einem Bayerhydroxid gemäß DE-PS 2852273 durch Anlöseverfahren erzeugtes Aluminiumhydroxid
Apryral 40 und 90: aus Standard-Bayer-Aluminatlauge mittels feinstteiligem Impfstoff erzeugtes feinkörniges Aluminiumhydroxid

Tabelle 1

| Versuchsbeispiel Nr. | Natrium-Aluminatlauge | | | Additiv | | Impfstoff [Impfrate, %] | | Kristallisations-Bedingungen | | Produktmorphologie | | | |
|---|---|---|---|---|---|---|---|---|---|---|---|---|---|
| | Molverh. Na2O/Al2O3 | Na2O [g/l] | Al2O3 [g/l] | Art | Einsatz-Menge, rd. [g/l] | Mahlprodukt | "Gereiftes Gel" | Zeit [h] | Temp. [°C] | Typus | Primärkristall-dimensionen | | |
| | | | | | | | | | | | Länge resp. Durchm. [µm] | Dicke [µm] | Form-faktor |
| 1 | 1,6 | 138 | 142 | Glyzerin | 4,7 | 2 | - | 48 | 80 | plättchenförmig-tafelig | 2-20 | 0,3-0,8 | 5-20 |
| 2 | 1,6 | 141 | 145 | " | 9,7 | 4 | - | 48 | 80 | " | 1-5 | 0,1-0,3 | 10-30 |
| 3 | 1,4 | 126*) | 147 | " | 9,8 | 2 | - | 48 | 80 | tafelig | 1-7 | 0,1-0,5 | 10-60 |
| 4 | 1,2 | 177 | 243 | " | 4,9 | - | - | 48 | 80 | tafelig | 10-30 | 0,05-0,3 | 5-30 |
| 5 | 1,2 | 164 | 225 | " | 6,0 | - | - | 48 | 90 | blattförmig | 10-50 | 0,3-2,4 | 20-30 |
| 6 | 1,2 | 176 | 242 | " | 9,7 | - | - | 48 | 80 | tafelig | 5-25 | 0,2-0,5 | 25-125 |
| 7 | 1,2 | 164 | 225 | " | 10,0 | - | - | 48 | 80 | tafelig | 10-30 | 0,3-2,7 | 10-20 |
| 8 | 1,2 | 164 | 225 | " | 15,0 | - | - | 48 | 80 | blattförmig (talkumartig) | 10-30 | 0,05-0,15 | 50-250 |
| 9 | 1,2 | 122 | 167 | " | 9,8 | 2 | - | 48 | 80 | plättchenförmig | 1-5 | 0,1-0,15 | 10-30 |
| 10 | 1,2 | 103 | 141 | " | 9,8 | 2 | - | 48 | 80 | plättchenförmig-dünntafelig | 1-8 | 0,1-0,15 | 10-80 (140) |
| 11 | 1,2 | 180 | 243 | " | 9,7 | 2 | - | 48 | 80 | plättchenförmig | 1-7 | 0,05-0,1 | 10-140 |
| 12 | 1,2 | 105 | 144 | " | 9,6 | 6 | - | 48 | 80 | plättchenförmig-tafelig | 1-2 | 0,05-0,1 | 5-25 |
| 13 | 1,4 | 205 | 233 | Ölsäure | 4,7 | 2 | - | 48 | 80 | plättchenförmig-tafelig | 2-8 | 0,3-0,5 | 5-25 |
| 14 | 1,2 | 157 | 215 | " | 2,4 | - | - | 48 | 80 | " | 0,5-3,0 | 0,1-0,25 | 5-30 |
| 15 | 1,2 | 164 | 225 | " | 4,0 | - | - | 48 | 80 | plättchenförmig | 2-5 | 0,2-0,4 | 5-20 |
| 16 | 1,2 | 109 | 150 | " | 4,0 | - | - | 48 | 80 | " | 0,5-2 | 0,05-0,1 | 5-10 |
| 17 | 1,2 | 180 | 243 | " | 4,9 | - | - | 48 | 80 | " | 2-5 | 0,2-0,4 | 5-10 |
| 18 | 1,2 | 108 | 146 | " | 4,9 | - | - | 48 | 80 | " | 2/5-8 | 0,2-0,6 | 5-10 |
| 19 | 1,2 | 157 | 215 | " | 12,0 | - | - | 48 | 80 | plättchenförmig (kaolinartig) | 0,5-2,0 | 0,1-0,2 | 5-10 |
| 20 | 1,6 | 190 | 195 | K-Oleat | 2,4 | 2,5 | - | 48 | 80 | plättchenförmig-tafelig | 2-8 | 0,3-0,5 | 5-25 |
| 21 | 1,3 | 193 | 244 | " | 2,4 | - | - | 48 | 70 | tafelig | 5-40 | 0,5-1,0 | 10-20 |
| 22 | 1,25 | 185 | 244 | " | 2,4 | - | - | 48 | 90 | dünntafelig | 10-50 | 0,05-1,5 | 40-50 |
| 23 | 1,2 | 157 | 215 | " | 2,4 | - | - | 48 | 80 | tafelig | 5-30 | 0,2-2,5 | 5-70 |
| 24 | 1,2 | 178 | 244 | " | 2,4 | - | - | 48 | 90 | tafelig | 10-30 | 0,5-1,5 | 20-60 |
| 25 | 1,2 | 180 | 244 | " | 2,4 | - | - | 48 | 80 | tafelig | 5-20 | 0,5-1,5 | 5-20 |
| 26 | 1,2 | 157 | 215 | " | 12 | - | - | 48 | 80 | tafelig | 5-15 | 0,2-3,0 | 5-10 |
| 27 | 1,4 | 205 | 234 | Tween 80 | 2,3 | 2 | - | 48 | 80 | plättchenförmig-tafelig | 2-10 | 0,1-0,5 | 5-20 |
| 28 | 1,3 | 148 | 188 | " | 2,4 | - | - | 48 | 90 | tafelig | 7-30 | 0,1-5 | 5-70 |
| 29 | 1,25 | 143 | 188 | " | 2,4 | - | - | 48 | 50 | plättchenförmig-tafelig | 0,5-2 | 0,05-0,2 | 10-15 |
| 30 | 1,2 | 160 | 225 | " | 1,0 | - | - | 48 | 80 | tafelig | 5-20 | 0,3-2,5 | 5-15 |
| 31 | 1,2 | 178 | 244 | " | 2,4 | - | - | 48 | 80 | tafelig | 3-20 | 0,1-2 | 10-30 |
| 32 | 1,2 | 107 | 146 | " | 2,4 | - | - | 48 | 80 | tafelig | 10-50 | 2-5 | 5-10 |
| 33) | 1,7 | 124*) | 120 | $Li_2SO_4$ | 8,9 | 10 | - | 48 | 40 | plättchenfömig (kaolinähnlich) | 0,5-1 | 0,05-0,1 | 5-20 |
| 34( | 1,3 | 140*) | 177 | LiOH | 9,4 | - | - | 48 | 80 | " | 0,5-5 | 0,05-0,2 | 5-50 |
| 35 °) | 1,2 | 160 | 225 | LiOH | 20 | - | - | 48 | 80 | plättchenförmig | 0,5-2 | 0,2-0,4 | 5-10 |
| 36) | 1,2 | 160 | 225 | $Li_2SO_4$ | 20 | - | - | 48 | 80 | " | 0,5-2 | 0,05-0,1 | 10-25 |
| 37 | - | 142 | 155 | $K_2O$[als KOH] | 47 | - | - | 64 | 50 | würfelförmig-kurzprismatisch | 3-8 | 1,3-5,3 | 1-2 |
| 38' | 1,4 | 167*) | 196 | Weinsäure | 4,9 | 2 | - | 48 | 80 | kurzprismatisch | 0,5-4 | 0,5-2,5 | 1-2 |
| 38 | 1,2 | 146 | 106 | Weinsäure | 4,9 | - | - | 48 | 80 | prismat.-faserig | 10-30 | 0,5-2 | 5-50 |
| 39 | 1,2 | 146 | 106 | Weinsäure | 4,9 | 2 | - | 48 | 90 | langprism.-nadelig | Ø (3-7) | Ø 0,5 | 5-10 |
| 40 | 1,2 | 146 | 106 | Na-K-Tartrat | 12,2 | 2 | - | 48 | 90 | langprism.-nadelig | 2-5 | 0,1-0,3 | 5-10 |
| 41 | 1,2 | 146 | 106 | Na-K-Tartrat | 12,2 | 2 | - | 48 | 80 | langprism.-stengel | (1-)5 | 0,5-0,7 | 5-10 |
| 42 | 1,2 | 152 | 214 | Di-K-Tartrat | 24 | - | - | 48 | 80 | nad.-steng.-faser. | 5-15 | 0,2-3 | 5-10 |
| 43 | 1,2 | 150 | 215 | Weinsäure | 4,8 | - | 0,5 | 48 | 80 | langprism.-stengel. | 3-8 | 0,5-1,5 | 5-10 |
| 44 | 1,2 | 134 | 192 | Weinsäure | 4,8 | - | 1,5 | 48 | 80 | " " | 5-12 | 1-2 | 5-10 |
| 45 | 1,2 | 117 | 168 | Weinsäure | 4,8 | - | 1,7 | 48 | 80 | " " | 5-13 | 1-1,5 | 5-10 |
| 46 | 1,2 | 123 | 168 | Weinsäure | 4,8 | - | 1,7 | 48 | 80 | " " | 5-20 | 1-2 | 5-20 |
| 47 | 1,2 | 101 | 144 | Weinsäure | 4,8 | - | 2 | 48 | 80 | " " | 7-15 | 1-2 | 5-8 |
| 48 | 1,2 | 101 | 144 | Weinsäure | 4,8 | - | 2 | 48 | 80 | langprism.-spießig | 10-30 | 2-4 | 5-8 |

°) Kristallisate z.T. mit hohem Li-Aluminat-Gehalt       *) bei Bayerlaugen: $Na_2O = Na_2O_{frei}$

5

Tabelle 2

## Zugfestigkeitsprüfungen an Extrudaten ungefüllter und gefüllter Thermoplaste

(Extrusion mit 1 % Gleitmittelzusatz; Extrudat-Prüfkörperlänge-/Durchmesser: 14/ rd.0,8 cm)

| Aluminiumhydroxid | | Füll-grad [%] | Extrus.-Temp. [°C] | LOI-Wert [%] gem. ASTM D2863 | Zug-festig-keit [N/mm²] | Zugfestig-keits-änderung Δ [%] | Anmerkungen zum Einsatzprodukt Aluminiumhydroxid |
|---|---|---|---|---|---|---|---|
| Einsatzprodukt | Korngröße bzw. Primärkr. Größe [µm] | | | | | | |
| PE − | − | 0 | 140 | 17,6 | 10,8 | − | − |
| Apyral 4[9a-65] | $d_{50}$= 7-10  K.ca. 3-25 | 65 | 140/150 | 25,1 | 4,2 | − 61 | |
| Apyral40 [8a-65] | $d_{50}$=1,5-2,5  K.ca.0,5-5,5 | 65 | 140/150 | 28,9 | 9,2 | − 15 | |
| Apyral90, ob. | $d_{50}$=1,5-2  K.ca. 0,5-4 | 65 | 150 | 39,5 | 10,1 | − 7 | Oberflächenbeh.[0,6%] |
| G9387 [3a-65] | K.Ø 2,5;  Dicke Ø 0,1 | 65 | 148 | 31,6 | 11,7 | + 8 | Additiv: Glyzerin |
| 226/1-3 | K.Ø 50/70; Dicke Ø 7 | 65 | 140/150 | 30,8 | 12,0 | + 11 | Additiv: Tartrat |
| PP − | − | 0 | 190-210 | 17,6 | 21,5 | − | − |
| Apyral 4[9b-65] | $d_{50}$= 7-10  K.ca. 3-25 | 65 | 190-200 | 24,9 | 7,2 | − 67 | |
| Apyral40 [8b-65] | $d_{50}$=1,5-2,5  K.ca.0,5-5,5 | 65 | 190-200 | 26,8 | 6,9 | − 68 | |
| Apyral90, ob. | $d_{50}$= 1,5-2  K.ca. 0,5-4 | 65 | 190-200 | n.b. *) | n.b. *) | n.b. | Oberflächenbeh.[0,6%] |
| Al/2 | K Ø 0,5-2; Dicke Ø0,2-0,4 | 60 | "150" | 24,4 | 25,5 | + 19 | Weitgeh. Li-Aluminat |
| ABS − | − | 0 | [195]160 | 17,7 | 6,3 | − | − |
| Apyral4[9c-65] | $d_{50}$= 7-10  K.ca. 3-25 | 65 | 155 | 31,1 | 4,9 | − 22 | |
| Apyral40[8c-65] | $d_{50}$=1,5-2,5  K.ca.0,5-5,5 | 65 | 155 | 33,9 | 7,3 | + 16 | |
| Apyral90, ob. | $d_{50}$= 1,5-2  K.ca. 0,5-4 | 65 | 155 | n.b.*) | n.b.*) | n.b. | Oberflächenbeh.[0,6%] |
| G31387a [6c-65] | KØ 3-5;  DickeØ 0,2-0,3 | 65 | 155 | 34,1 | 7,0 | + 15 | Add.: Ölsäure, angel.Prod. |
| G24287a [2c-65] | KØ 4;  DickeØ 0,4 | 65 | 155 | 30,9 | 7,3 | + 16 | Add.: K-Na-Tartrat; ang. Prod. |
| G31387 [5c-65] | KØ 1-5;  DickeØ 0,2-0,3 | 65 | 155 | 33,2 | 7,6 | + 21 | Add.:Ölsäure |
| Al/2 | KØ 0,5-2;  DickeØ 0,2-0,4 | 65 | 145 | 34,4 | 8,0 | + 27 | Add.: Li ; Prod. weitg. Li-Al. |
| 226/1-3 | KØ50-70;  Dicke Ø 7 | 65 | 153 | 30,3 | 10,5 | + 40 | Add.: Tartrat |
| G9387a [4c-65] | KØ 2,5;  Dicke Ø 0,1 | 65 | 155 | 34,0 | 10,9 | + 73 | Add.: Glyzerin; angel. Prod. |

*) unbrauchbares Extrudat

**Patentansprüche**

1. Verfahren zur Herstellung von Füllstoffen und Flammschutzmitteln auf der Basis von Aluminiumhydroxid in Form von Hydrargillit (Gibbsit) durch Kristallisation aus einer Natriumaluminatlauge bei einem pH-Wert > 12, unter Rührung, bei Temperaturen oberhalb von 40 °C, anschließender Filtration des Hydrargillits (Gibbsits) und Kreislaufführung der Laugen, wobei die Natriumaluminatlauge eine Konzentration von $Na_2O$ = 60 - 250 g/l und $Al_2O_3$ = 70 - 300 g/l aufweist und das Molverhältnis $Na_2O : Al_2O_3$ < 1,8 beträgt, dadurch gekennzeichnet, daß der Natriumaluminatlauge zur Ausbildung von nadelig-stengeligen bis plättchen-/tafelförmigen Hydrargillitstrukturen (Gibbsitstrukturen) mit Formfaktoren ≧ 5 Additive in Mengen von 0,1 - 30 g/l in Form von Polyalkohol, Hydroxycarbonsäure, Fettsäure und/oder Lithiumionen enthaltende Verbindungen zugesetzt werden.

2. Verfahren nach Anspruch 1, dadurch gekennzeichnet, daß die Kristallisation aus Natriumaluminatlauge unter Rührung bevorzugt bei einem Molverhältnis $Na_2O : Al_2O_3$ ≦ 1,3 erfolgt.

3. Verfahren nach einem der vorhergehenden Ansprüche, dadurch gekennzeichnet, daß die Kristallisation aus Natriumaluminatlauge unter Rührung bei Temperaturen zwischen 70 und 125 °C erfolgt.

4. Verfahren nach einem der vorhergehenden Ansprüche, dadurch gekennzeichnet, daß als Polyalkohol aliphatische und/oder aromatische Alkohole mit mindestens 3 Hydroxylgruppen und Phenole mit mindestens zwei Hydroxylgruppen eingesetzt werden.

5. Verfahren nach einem der vorhergehenden Ansprüche, dadurch gekennzeichnet, daß als Hydroxycarbonsäure aliphatische Carbonsäuren mit mindestens 4 C-Atomen eingesetzt werden.

6. Verfahren nach einem der vorhergehenden Ansprüche, dadurch gekennzeichnet, daß als Fettsäuren gesättigte und/oder ungesättigte Fettsäuren mit jeweils mindestens 15 C-Atomen eingesetzt werden.

7. Verfahren nach einem der vorhergehenden Ansprüche, dadurch gekennzeichnet, daß die Additive Polyalkohol, Hydroxycarbonsäure, Fettsäure und/oder Lithiumionen enthaltende Verbindungen in Form von Abkömmlingen oder Salzen oder Additivkombinationen eingesetzt werden.

8. Verfahren nach einem der vorhergehenden Ansprüche, dadurch gekennzeichnet, daß die Rührdauer während der Kristallisation 48-120 Stunden beträgt.

9. Verfahren nach einem der vorhergehenden Ansprüche, dadurch gekennzeichnet, daß die Additivmenge 1-10 g/l Natriumaluminatlauge beträgt.

10. Verfahren nach einem der vorhergehenden Ansprüche, dadurch gekennzeichnet, daß während der Kristallisation Aluminiumhydroxid mit einem mittleren Korndurchmesser von ≦ 3 $\mu$m als Impfstoff mit $Al_2O_3$-Impfraten von 0,5 - 20 % bezogen auf den $Al_2O_3$-Anfangsgehalt der Natriumaluminatlaugen zugesetzt wird.

11. Verfahren nach einem der vorhergehenden Ansprüche, dadurch gekennzeichnet, daß als Impfstoff Aluminiumhydroxid aus einem Mahlprozeß oder aus einem Gelreifungsprozeß verwendet wird.

12. Verfahren nach einem der vorhergehenden Ansprüche, dadurch gekennzeichnet, daß zur Herstellung von nadelig-stengeligen bis faserförmigen Aluminiumhydroxidkristallen mit einer mittleren Partikellänge von 0,5 bis 50 $\mu$m und einem mittleren Partikeldurchmesser von 0,1 bis 7 $\mu$m als Additiv Weinsäure oder Tartrat in einer Menge von 5 - 15 g/l Lauge verwendet wird.

13. Verfahren nach einem der vorhergehenden Ansprüche, dadurch gekennzeichnet, daß zur Herstellung von plättchenförmigen bis tafelförmigen Aluminiumhydroxidkristallen mit einem mittleren Partikeldurchmesser von 0,5 - 70 $\mu$m und einer mittleren Dicke von 0,1, bis 3 $\mu$m als Additiv Glyzerin, Tween, Ölsäure bzw. Oleat und/oder ein Lithiumsalz in einer Menge von 1 - 10 g/l Lauge zugesetzt wird.

14. Füllstoff, Flammschutzmittel und/oder Verstärkungsmittel auf der Basis von Hydrargillit (Gibbsit), gekennzeichnet durch eine nadelig-stengelige bis faserförmige Struktur mit einem Formfaktor ≧ 5 bei einer Partikellänge von 0,5 bis 100 $\mu$m und einem Partikeldurchmesser von 0,1 - 10 $\mu$m.

15. Füllstoff, Flammschutzmittel und/oder Verstärkungsmittel auf der Basis von Hydrargillit (Gibbsit), gekennzeichnet durch eine plättchen- bis tafelförmige Struktur mit einem Formfaktor ≧ 5 bei einem Partikeldurchmesser von 0,5 bis 100 $\mu$m und einer Partikeldicke von 0,1 - 5 $\mu$m.

16. Verwendung von Aluminiumhydroxid in Form von Hydrargillit (Gibbsit), hergestellt durch Kristallisation aus einer Natriumaluminatlauge bei einem pH-Wert > 12 unter Rührung, bei Temperaturen oberhalb von 40 °C und anschließender Filtration des Hydrargillits (Gibbsits), wobei die Natriumaluminatlauge eine Konzentration von $Na_2O$ = 60 - 250 g/l und $Al_2O_3$ = 70 - 300 g/l aufweist, das Molverhältnis $Na_2O$ : $Al_2O_3$ < 1,8 beträgt und der Natriumaluminatlauge zur Ausbildung von nadelig-stengeligen bis plättchen-/tafelförmigen Hydrargillitstrukturen (Gibbsitstrukturen) mit Formfaktoren $\geq$ 5 Additive in Mengen von 0,1 - 30 g/l in Form von Polyalkohol, Hydroxycarbonsäure, Fettsäure und/oder Lithiumionen enthaltende Verbindungen zugesetzt werden als Verstärkungsmittel für Kunststoffe.

**Claims**

1. A method of producing fillers and fireproofing agents based on aluminium hydroxide in the form of hydrargillite (gibbsite) by crystallisation from a sodium aluminate liquor at pH > 12, with agitation, at temperatures above 40°C, subsequent filtration of the hydrargillite (gibbsite) and circulation of the liquors, the sodium aluminate liquor having a concentration of $Na_2O$ = 60 - 250 g/l and $Al_2O_3$ = 70 - 300 g/l and a molar ratio of $Na_2O$ : $Al_2O_3$ < 1.8, characterised in that in order to form acicular spiky to plate-like or flat hydrargillite structures (gibbsite structures) with form factors $\geq$ 5, additives in quantities of 0.1 - 30 g/l and in the form of polyalcohol, hydroxycarboxylic acid, fatty acid and/or compounds containing lithium ions are added to the sodium aluminate liquor.

2. A method according to claim 1, characterised in that crystallisation is brought about from sodium aluminate liquor with agitation, preferably at a molar ratio of $Na_2O$ : $Al_2O_3$ $\leq$ 1.3.

3. A method according to any of the preceding claims, characterised in that crystallisation is brought about from sodium aluminate liquor with agitation at temperatures between 70 and 125°C.

4. A method according to any of the preceding claims, characterised in that the polyalcohols are aliphatic and/or aromatic alcohols containing at least three hydroxyl groups or phenols containing at least two hydroxyl groups.

5. A method according to any of the preceding claims, characterised in that the hydroxycarboxylic acids are aliphatic carboxylic acids with at least 4 carbon atoms.

6. A method according to any of the preceding claims, characterised in that the fatty acids are saturated and/or unsaturated fatty acids with at least 15 carbon atoms.

7. A method according to any of the preceding claims, characterised in that the additives are polyalcohol, hydroxycarboxylic acid, fatty acid and/or compounds containing lithium ions and in the form of derivatives or salts or additive combinations.

8. A method according to any of the preceding claims, characterised in that the duration of agitation during crystallisation is 48 to 120 hours.

9. A method according to any of the preceding claims, characterised in that the amount of additive is 1 - 10 g/l sodium aluminate liquor.

10. A method according to any of the preceding claims, characterised in that during crystallisation, an inoculant is added in the form of aluminium hydroxide having an average particle size of $\leq$ 3 $\mu$m at $Al_2O_3$ inoculation rates of 0.5 - 20% relative to the initial $Al_2O_3$ content of the sodium aluminate liquors.

11. A method according to any of the preceding claims, characterised in that the inoculant is aluminium hydroxide from a grinding process or a gel ripening process.

12. A method according to any of the preceding claims, characterised in that additives in the form of tartaric acid or tartrate in a proportion of 5 - 15 g/l liquor are used in order to produce acicular or spiky to fibrous aluminium hydroxide crystals with an average particle length of 0.5 to 50 $\mu$m and an average

particle diameter of 0.1 to 7 $\mu$m.

13. A method according to any of the preceding claims, characterised in that additives in the form of glycerol, Tween, oleic acid or oleate and/or a lithium salt are added in a proportion of 1 - 10 g/l liquor in order to produce plate-like or flat aluminium hydroxide crystals with an average particle diameter of 0.5 - 70 $\mu$m and an average thickness of 0.1 to 3 $\mu$m.

14. A filler, flameproofing agent and/or reinforcing agent based on hydrargillite (gibbsite), characterised by an acicular spiky to fibrous structure with a form factor $\geq$ 5, a particle length of 0.5 to 100 $\mu$m and a particle diameter of 0.1 - 10 $\mu$m.

15. A filler, flameproofing agent and/or reinforcing agent based on hydrargillite (gibbsite), characterised by a plate-like or flat structure with a form factor $\geq$ 5, a particle diameter of 0.5 to 100 $\mu$m and a particle thickness of 0.1 - 5 $\mu$m.

16. Use of aluminium hydroxide in the form of hydrargillite (gibbsite) prepared by crystallisation from a sodium aluminate liquor at a pH > 12 with agitation at temperatures above 40°C and subsequent filtration of the hydrargillite (gibbsite), the sodium aluminate liquor having a concentration of $Na_2O$ = 60 - 250 g/l and $Al_2O_3$ = 70 - 300 g/l, the molar ratio of $Na_2O$ : $Al_2O$ being < 1.8 and reinforcing agents for plastics in quantities of 0.1 - 30 g/l and in the form of polyalcohol, hydroxycarboxylic acid, fatty acid and/or compounds containing lithium ions being added to the sodium aluminate liquor in order to form acicular or spiky to plate-like or flat hydrargillite structures (gibbsite structures) with form factors $\geq$ 5.

## Revendications

1. Procédé de préparation de matières de remplissage et de matériaux ignifuges à base d'hydroxyde d'aluminium sous forme d'hydrargillite (gibbsite) par cristallisation à partir d'une lessive d'aluminate de sodium à un pH supérieur à 12, en agitant, à des températures supérieures à 40°C, puis en filtrant d'hydrargillite (gibbsite) et en recyclant les lessives, dans lequel la lessive d'aluminate de sodium présente une concentration de $Na_2O$ = 60 - 250 g/l et $Al_2O_3$ = 70 - 300 g/l et le rapport molaire $Na_2O$ : $Al_2O_3$ est inférieur à 1,7, caractérisé en ce que les lessives de sodium-aluminium sont ajoutées pour former des structures d'hydrargillite en forme d'aiguilles-tiges à plaquettes-tables (structures gibbsite) avec des facteurs de forme supérieurs ou égaux à 5 des additifs en des quantités de 0,1 - 30 g/l sous forme de polyalcools, d'acide hydroxycarboxylique, d'acide gras et/ou de composés contenant des ions lithium.

2. Procédé selon la revendication 1, caractérisé en ce que la cristallisation s'effectue à partir de lessive d'aluminate de sodium en agitant de préférence à un rapport molaire $Na_2O$ : $Al_2O_3$ inférieur ou égal à 1,3.

3. Procédé selon l'une des revendications précédentes, caractérisé en ce que la cristallisation s'effectue à partir de lessive d'aluminate de sodium en agitant à des températures comprises entre 70 et 125°C.

4. Procédé selon l'une des revendications précédentes, caractérisé en ce qu'on utilise comme polyalcools des alcools aliphatiques et/ou aromatiques avec au moins 3 groupes hydroxyles et des phénols ayant au moins 2 groupes hydroxyles.

5. Procédé selon l'une des revendications précédentes, caractérisé en ce qu'on utilise comme acides hydroxycarboxyliques des acides carboxyliques aliphatiques ayant au moins 4 atomes de carbone.

6. Procédé selon l'une des revendications précédentes, caractérisé en ce qu'on utilise comme acides gras des acides gras saturés et/ou insaturés ayant à chaque fois au moins 15 atomes de carbone.

7. Procédé selon l'une des revendications précédentes, caractérisé en ce qu'on utilise comme additifs un polyalcool, un acide hydroxycarboxylique, un acide gras et/ou des composés contenant des ions lithium sous forme de dérivés ou de sels ou de combinaisons d'additifs.

8. Procédé selon l'une des revendications précédentes, caractérisé en ce que la durée d'agitation s'élève pendant la cristallisation à 48 - 120 heures.

9. Procédé selon l'une des revendications précédentes, caractérisé en ce que la quantité d'additif s'élève à 1 - 10 g/l de lessive d'aluminate de sodium.

10. Procédé selon l'une des revendications précédentes, caractérisé en ce que pendant la cristallisation on ajoute aux lessives d'aluminate de sodium de l'hydroxyde d'aluminium ayant une granulométrie moyenne inférieure ou égale à 3 $\mu$m comme dopant avec des taux de dopant $Al_2O_3$ de 0,5-20% par rapport à la teneur de départ en $Al_2O_3$.

11. Procédé selon l'une des revendications précédentes, caractérisé en ce qu'on utilise comme dopant de l'hydroxyde d'aluminium provenant d'un procédé de broyage ou d'un procédé de maturation de gel.

12. Procédé selon l'une des revendications précédentes, caractérisé en ce que pour préparer des cristaux d'hydroxyde d'aluminium en aiguilles-tiges jusqu'en formes de fibres, ayant une longueur particulaire moyenne de 0,5 à 50 $\mu$m et un diamètre particulaire moyen de 0,1 à 7 $\mu$m, on utilise comme additif l'acide tartrique ou le tartrate en une quantité de 5-15 g/l de lessive.

13. Procédé selon l'une des revendications précédentes, caractérisé en ce que pour préparer des cristaux d'hydroxyde d'aluminium en forme de plaquettes jusqu'en forme de tables ayant un diamètre particulaire moyen de 0,5 - 70 $\mu$m et une épaisseur moyenne de 0,1 à 3 $\mu$m, on ajoute comme additif la glycérine, le Tween, l'acide oléique ou l'oléate et/ou un sel de lithium en une quantité de 1-10 g/l de lessive.

14. Matière de remplissage, matériau ignifuge et/ou matière de renforcement à base d'hydrargillite (gibbsite), caractérisée par une structure en aiguille-tige jusqu'en forme de tige ayant un facteur de form" supérieur ou égal à 5 avec une longueur particulaire de 0,5 à 100 $\mu$m et un diamètre particulaire de 0,1 - 10 $\mu$m.

15. Matière de remplissage, matériau ignifuge et/ou matière de renforcement à base d'hydrargillite (gibbsite), caractérisée par une structure en forme de plaquette jusqu'en forme de table ayant un facteur de forme supérieur ou égal à 5 avec un diamètre particulaire de 0,5 à 100 $\mu$m et une épaisseur particulaire de 0,1 - 5 $\mu$m.

16. Utilisation d'hydroxyde d'aluminium sous forme d'hydrargillite (gibbsite), préparé par cristallisation à partir d'une lessive d'aluminate de sodium à un pH supérieur à 12 tout en agitant, à des températures supérieures à 40°C, puis en filtrant l'hydrargillite (gibbsite), où la lessive d'aluminate de sodium présente une concentration de $Na_2O$ = 60 - 250 g/l et d'$Al_2O_3$ = 70 - 300 g/l, un rapport molaire $Na_2O:Al_2O_3$ inférieur à 1,8 et en ce que la lessive d'aluminate de sodium pour la formation de structures d'hydrargillite (gibbsite) en forme d'aiguille-tige à plaquettes/tables avec des facteurs de forme supérieurs ou égaux à 5 reçoit l'addition d'additifs en des quantités de 0,1 - 30 g/l sous forme de polyalcools, d'acides hydroxycarboxyliques, d'acide gras et/ou de composés contenant des ions lithium, comme agents de renforcement pour les matières synthétiques.

# Fig. 1

VERFAHRENSSCHEMA

EP 0 327 660 B1